# EUROPEAN PATENT APPLICATION

(11) **EP 1 818 293 A1**
(43) Date of publication of application: **15.08.2007**
(21) Application number: 06425077.2
(22) Date of filing: 13.02.2006
(51) Int. Cl.: B65G 47/64

(54) **Conveying apparatus**

(71) Applicant: L.M. S.p.A., 41100 Modena (IT)
(72) Inventor: Solieri, Ivan, 41100 Modena (IT)
(74) Representative: Conti, Igino

(57) **Abstract**

The product conveying apparatus (1) comprises an endless belt (6), made up of chain links (7) and trained around a plurality of idle and transmission rollers (8b) and defines an active product transporting section (9) and a return section. At least one (13) of the end portions (12,13) of the active section (9) is designed to move along a line (D1) parallel to the axes (11b) of the rollers (8b).

## Description

The present invention relates to a conveying apparatus.

In particular, the invention relates to a sortation conveying apparatus which divides a product feed lane in such a way that the products are conveyed to different destinations.

Sortation is required when products or goods moving along a single lane need to be sorted or distributed between two or more different lanes.

Sortation conveyors are known which comprise a plurality of metal rods fixed at both ends to two respective endless chains trained around respective rotating parts that may be either power-driven or idle.

The rods mount respective shoes on which the goods move. The shoes are slidably engaged with the rods in such a way as to change their positions according to the longitudinal axes of the rods.

In other words, the shoes are fed along a first conveyor line perpendicular to the rods but, as they advance, they slide along a second line perpendicular to the first line and, as stated, substantially parallel to the longitudinal axes of the rods.

Prior art teaches, for example in patent documents US 4,984,675 and US 5,115,902, that the sliding motion of the shoes along the second line perpendicular to the feed line is achieved by engaging each shoe with respective mechanical guide parts (tracks, rails, etc.).

Prior art solutions have several disadvantages, however.

A first disadvantage is due to the presence of the mechanical guide parts which, besides greatly complicating the system as a whole, are awkward to clean and make it very difficult to keep hygiene at an acceptable level.

This problem is felt particularly strongly in the food industry.

Another drawback is the fact that the shoes may be spaced too far apart, making it impossible to convey small goods or products and leading to irregular conveyor motion.

Yet another drawback connected with the use of known sortation conveyors is due to the large curvature radius of the rotating parts as a result of the considerable size of the sliding shoes.

In other words, since the shoes are often very large, it is impossible to obtain a small curvature radius at the ends of the active branch of the conveyor.

Obviously, this drawback is reflected in the considerably large size of conveyors of this kind.

The aim of this invention is to overcome the above mentioned drawbacks by providing a conveying apparatus that can be used to sort products and that is simple and inexpensive to make and practical to use.

The technical characteristics of the invention, with reference to the above aim, can be easily inferred from the appended claims, in particular claim 1, and also from any of the claims that depend, whether directly or indirectly, on claim 1. The advantages of the invention will become more apparent from the detailed description which follows, with reference to the accompanying drawings which illustrate preferred embodiments of the invention provided merely by way of example without restricting the scope of the inventive concept, and in which:
- Figure 1 is a schematic perspective view of a preferred embodiment of the conveying apparatus according to the present invention;
- Figure 2 is a side elevation view, with some parts cut away in order to better illustrate others, of the apparatus of Figure 1;
- Figure 3 is a schematic plan view from above of the apparatus of Figure 1 in two different working configurations;
- Figures 4, 5 and 6 are schematic perspective views of three different parts of the apparatus illustrated in the figures listed above;
- Figure 7 is a schematic top plan view of a second embodiment of the conveying apparatus according to the present invention;
- Figure 8 is a schematic top plan view of another embodiment of the conveying apparatus according to the present invention;
- Figure 9 is a schematic perspective view of yet another embodiment of the apparatus according to the present invention.

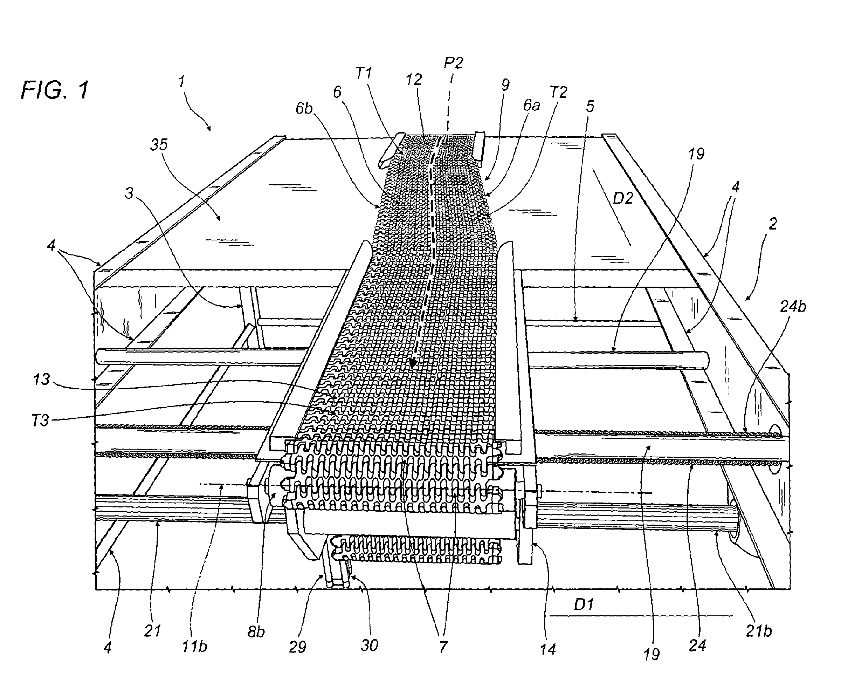

With reference to Figure 1, the numeral 1 denotes in its entirety an apparatus for conveying products which are not illustrated.

The apparatus 1 comprises a mounting frame 2 with a plurality of uprights 3 and a plurality of crosspieces 4 and 5, respectively longitudinal and transversal.

The uprights 3 and the crosspieces 4 and 5 are interconnected.

The transversal crosspieces 5 extend along a first line D1 while the longitudinal crosspieces 4 extend along a line D2 at right angles to the first line D1.

As shown in Figure 1, the apparatus 1 comprises a belt 6 consisting of a plurality of chain links 7 hinged to each other in succession.

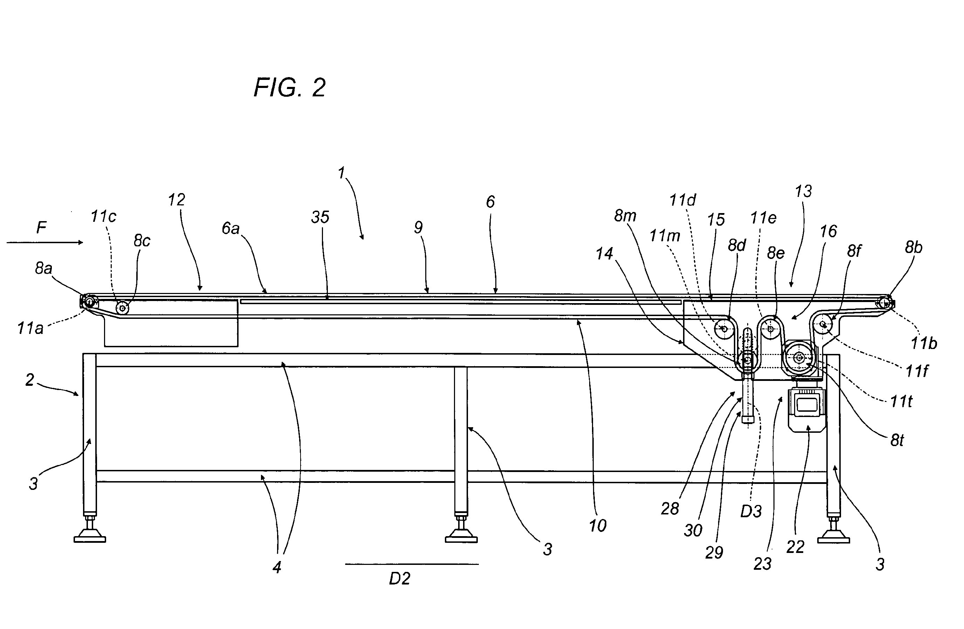

With reference to Figures 1 and 2, the endless chain-link belt 6 is trained around a plurality of idler rollers 8a, 8b, 8c, 8d, 8e, 8f and a transmission roller 8t and defines an active product transporting section 9 and a return section 10.

Each of the idler rollers 8a, 8b, 8c, 8d, 8e, 8f, 8m has a respective axis of rotation 11a, 11b, 11c, 11d, 11e, 11f, 11m parallel to the line D1.

The transmission roller 8t has an axis 11t.

As illustrated in Figure 2, the upper active section 9 has two end portions 12, 13, respectively upstream and downstream relative to the direction indicated by the arrow F which represents the feed direction of the belt 6 on the section 9.

The end portions 12, 13 are located in the vicinity of the respective idler rollers 8a, 8b mounted at the ends of the upper, active section 9.

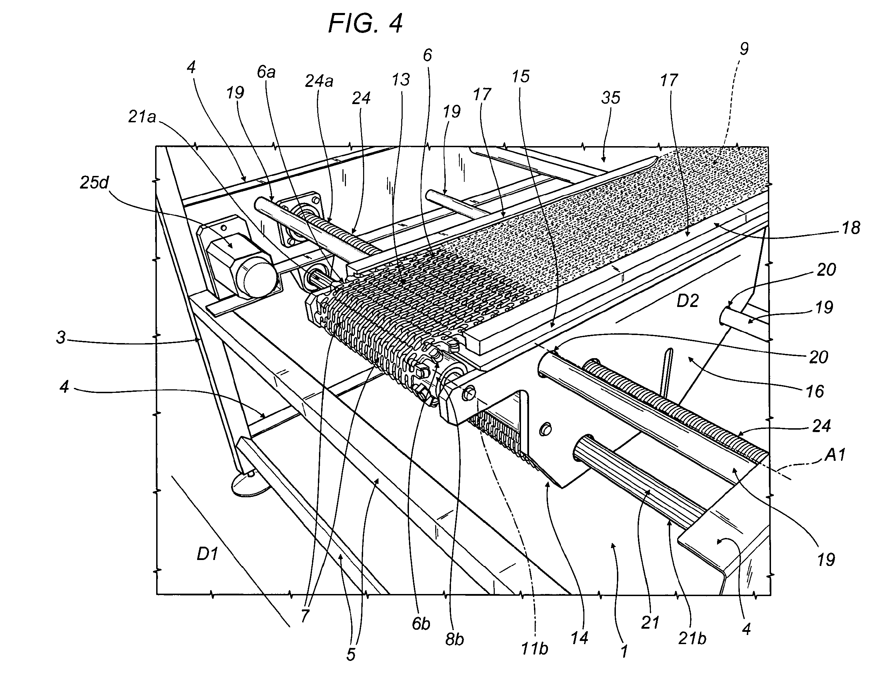

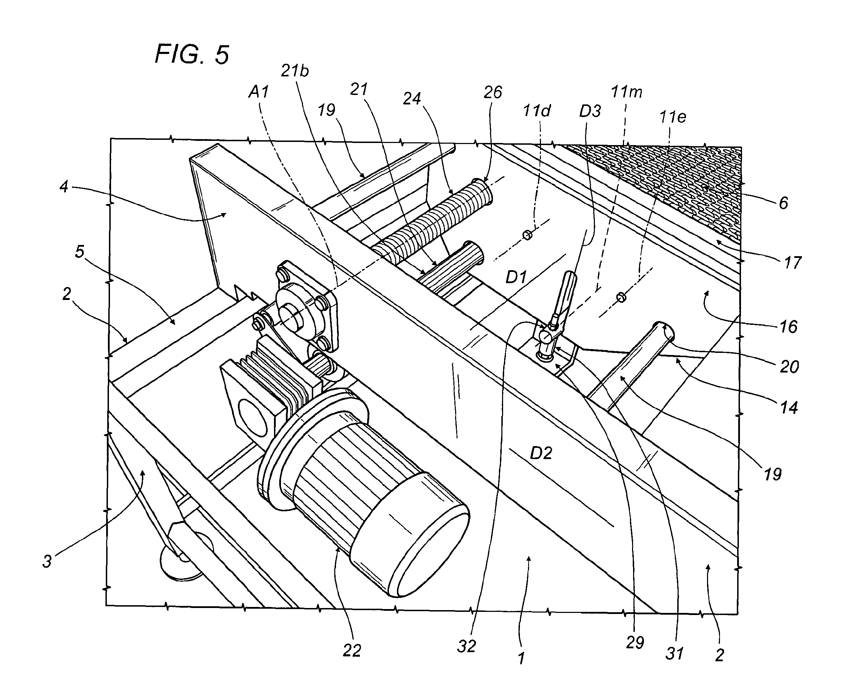

With reference to Figures 4 and 5, the apparatus 1 comprises a sliding element 14 that moves along the first line D1 and slidably supports the downstream end portion 13 of the section 9.

The sliding element 14 comprises a flat horizontal wall 15 on which the belt 6 moves and two parallel side walls 16 at right angles to the flat wall 15 and to the line D1, only one of the walls 16 being shown in Figure 4.

Two tracks 17, parallel to each other and to the line D2, are attached to the flat horizontal wall 15 on opposite sides of the belt 6 to laterally contain respective opposite longitudinal edges 6a, 6b of the belt 6.

The part of the belt 6 that is engaged by the tracks 17, as it moves over the sliding element 14, defines the aforementioned end portion 13 of the upper active portion 9.

The tracks 17 and the flat horizontal wall 15 together means 18 for guiding the belt 6 at the end portion 13.

The sliding element 14 is supported by two longitudinal crosspieces 4 of the frame 2 by means of two smooth rods 19 on which the element 14 can slide freely along the first line D1 thanks to conventional sliding guides which are not illustrated.

The smooth bars 19 are inserted into respective through holes 20 made in the side walls 16 of the sliding element 14.

A splined rod 21 is slidably supported at its ends 21a, 21b by the crosspieces 4 and, at the end 21b, is operatively connected to an electric motor 22, also mounted on the frame 2.

The splined rod 21 rotationally engages a matching internal profile of the roller 8t that drives the belt 6, the roller 8t being described in more detail below.

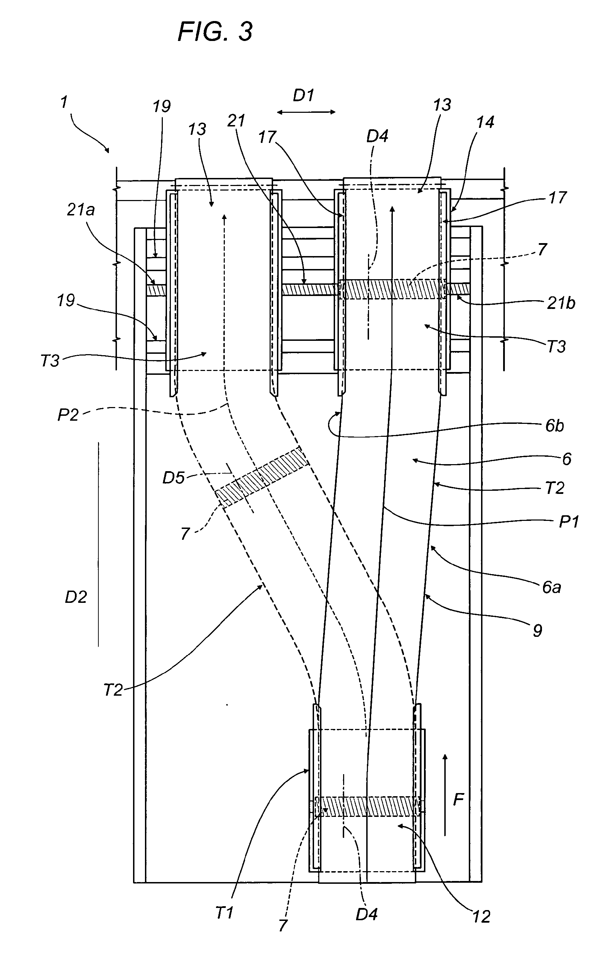

With reference in particular to Figures 3 and 5, the electric motor 22, the transmission roller 8t and the splined rod 21 together define means 23 for driving the belt 6.

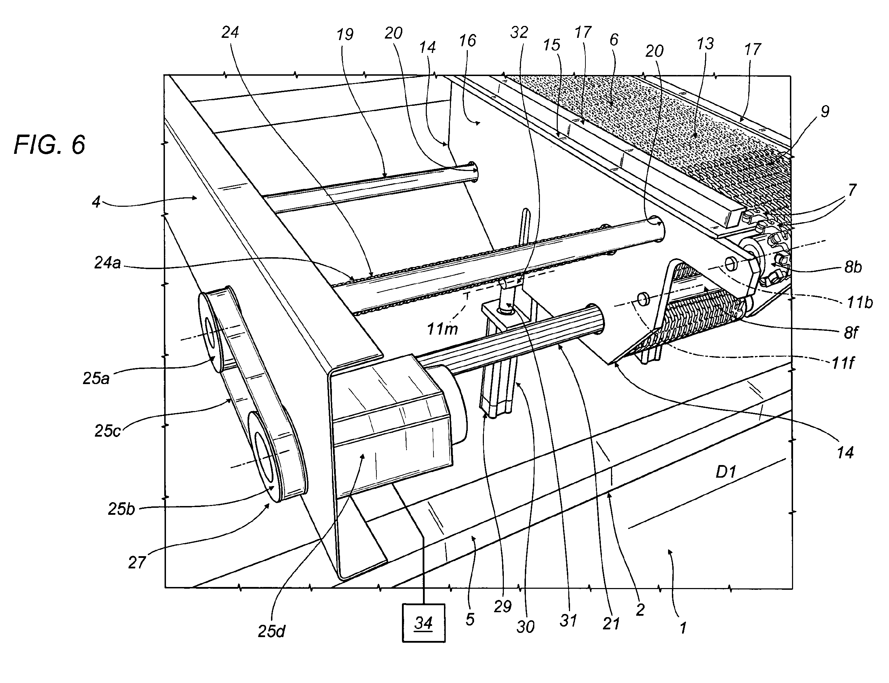

With reference to Figure 1 and 6, a threaded rod 24 is slidably supported at its ends 24a, 24b by the longitudinal crosspieces 4 and, at the end 24a, is operatively connected, through a driven pulley 25a a drive pulley 25b and a transmission belt 25c, to a drive motor 25d, also mounted on the frame 2.

The threaded rod 24, as it rotates about its axis A1, meshes with an internally threaded portion (not illustrated) of the sliding element 14.

The threaded rod 24 and the internally threaded portion (not illustrated) of the sliding element 14 define a lead nut and screw mechanism 26.

The drive motor 25d, the threaded rod 24 and the threaded, not illustrated portion of the sliding element 14 define means 27 for actuating the sliding element 14 itself.

As shown in Figure 2, the apparatus 1 comprises a device 28 for tensioning the belt 6.

The tensioning device 28 is housed in the sliding element 14 and comprises three idler rollers 8d, 8e, 8m of the chain-link belt 6.

More specifically, two of the idler rollers of the belt 6, namely the rollers 8d and 8e, rotate about respective axes 11d, 11e which are fixed with respect to the vertical side walls 16, whilst the rotation axis 11m of the roller 8m is movable with respect to the axes 11d, 11e of the rollers 8d, 8e. The axis 11m of the roller 8m is movable along a third line D3 perpendicular to both the first line D1 and to the second line D2 so as to vary its distance from the axes 11d, 11e of the rollers 8d, 8e, thereby changing the length of the path of the belt 6.

The belt 6 tensioning device 28 also comprises two actuating elements 29, which may be hydraulic or electric, mounted on each of the vertical walls 16 of the sliding element 14 and designed to move the movable roller 8m along the line D3.

In other words, each actuator 29, of substantially known type, comprises a fixed element 30 attached to the vertical wall 16 and a mobile stem 31 operatively connected to a pin 32 of the movable idler roller 8m.

The term "hydraulic" applied to the actuating element 29 is used to include pneumatic and oil-hydraulic actuators as well.

In other embodiments that are not illustrated, the actuating elements 29 are of the elastic type and comprise springs designed to keep the belt 6 tensioned to a certain extent between the idler rollers 8d, 8e and 8m.

The actuating elements 29, of whatever type they are, constitute means 33 for adjusting the position of the movable idler roller 8m.

In use, as shown by the solid line in Figure 3, the conveying apparatus 1 advances the products (not illustrated) along a substantially straight feed path P1.

In other words, with reference also to the other drawings, when the transmission roller 8t, acting in conjunction with the motor 22 and the splined rod 21, advances the chain-link belt 6, the products at the end portion 12 upstream of the upper, active section 9, are in turn fed along the section 9 in the direction indicated by the arrow F, towards the downstream end portion 13; from the end portion 13, the products are then transferred in a known manner that is not described to further processing and/or conveying units that are not illustrated.

As shown in Figure 3, this time by the dashed line, the downstream end portion 13 is designed to move along the line D1, together with the sliding element 14, to occupy a different configuration in which the products are advanced along a path P2 different from P1 and are transferred to different processing and/or conveying units.

In other terms, the translational movement of the end portion 13 of the active, transporting section 9 enables the conveying apparatus 1 to be used to sort the products to different destinations.

With reference to Figure 1, the path P2 extends along a first, initial stretch T1 of the active section 9, the stretch T1 substantially coinciding with the upstream end portion 12, a second, intermediate stretch T2 and a third, final stretch T3 of the section 9, substantially coinciding with the downstream end portion 13.

As clearly illustrated in Figure 3, along the stretches T1 and T3, the chain links 7 of the belt 6, only one of which is schematically illustrated in dashed line style, advance along respective instantaneous lines D4 which are substantially perpendicular to the first line D1; along the stretch T3, on the other hand, the chain links 7 of the belt 6, only one of which is schematically illustrated in dashed line style, advance along instantaneous lines D5 at an angle to the first line D1.

Advantageously, the chain links 7 making up the belt 6 are shaped and assembled in such a way as to enable each link to rotate to some extent, however small, with respect to the adjacent link about a generic axis perpendicular to the plane of Figure 3.

As illustrated in Figures 2, 3 and 4, when the position of the end portion 13 of the belt section 9 has to be changed in D1, thus modifying the path P1 along which the products are moving, a control unit, represented in Figure 6 as a block 34, powers the motor 25d which, by means of the pulleys 25a, 25b and the belt 25c, causes the threaded rod 24 to turn.

As it rotates, the threaded rod 24 meshes with the aforementioned threaded portion (not illustrated) of the sliding element 14, thus creating a lead nut and screw mechanism 26 and causing the sliding element 14 to move in both directions in D1, depending on the rotation direction imparted to the threaded rod 24 by the motor 25d.

As it moves along D1, the sliding element 14 runs on both the smooth rods 19 attached to the frame 2 of the apparatus 1 and on the splined rod 21 which can continue imparting its rotational motion to the transmission roller 8t of the belt 6.

As illustrated in Figure 1, the stretches T1 and T2 of the active, transporting section 9 lie on a table 35 on which the belt 6 runs.

Advantageously, therefore, changes in the position of the sliding element 14 in D1 cause the belt 6 to slide sideways on the table 35 without requiring any other parts to guide the belt 6.

Advantageously, the sliding table 35, besides being quick and easy to clean, creates a barrier preventing dirt and/or other unwanted material falling into the lower parts of the conveying apparatus 1.

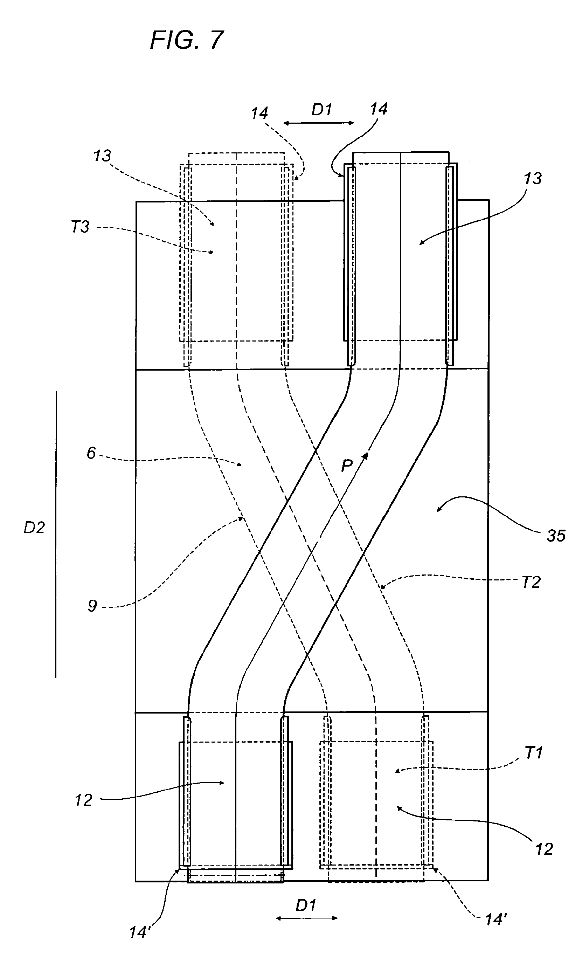

In another embodiment of the conveying apparatus 1, illustrated in Figure 7, both the end portions 12, 13 of the active transporting section 9 can slide along the first line D1. That means the apparatus 1 can be used not only to convey the products to different destinations but also to sort products coming in from different feed stations.

In other words, a single sliding end portion 12, 13 can be used to sort products from a single feed conveyor to different destinations, whereas if both end portions 12, 13 are made to slide, it is possible to receive products from different feed conveyors upstream and convey them to different destinations.

Again with reference to Figure 7, in the same way as the end portion 13 slidably engages the sliding element 14, so the end portion 12 slidably engages a respective sliding element 14' designed to change its position in D1.

As illustrated in Figure 7, the stretch T2 of the active, transporting section 9 lies on a table 35 on which the belt 6 runs.

Advantageously, therefore, changes in the position of the sliding elements 14, 14' in D1 cause the belt 6 to slide sideways on the table 35 without requiring any other parts to guide the belt 6.

In other embodiments of the invention which are not illustrated, the idler rollers 8 may be substituted by rounded surfaces of any shape adapted to transmit motion to the belt 6.

In yet another embodiment of the invention, the end portions 12, 13 of the active belt section 9, instead of moving translationally, might rotate about a vertical axis, for example at right angles to the plane of Figure 3, in such a way as to produce a relative movement of the two opposite end portions 12, 13 of the belt section 9 in the same way as the embodiments already described.

It will be understood that "translational movement" in this specification means any movement of the end portion of the active section of the belt either in a straight line or following a curved path.

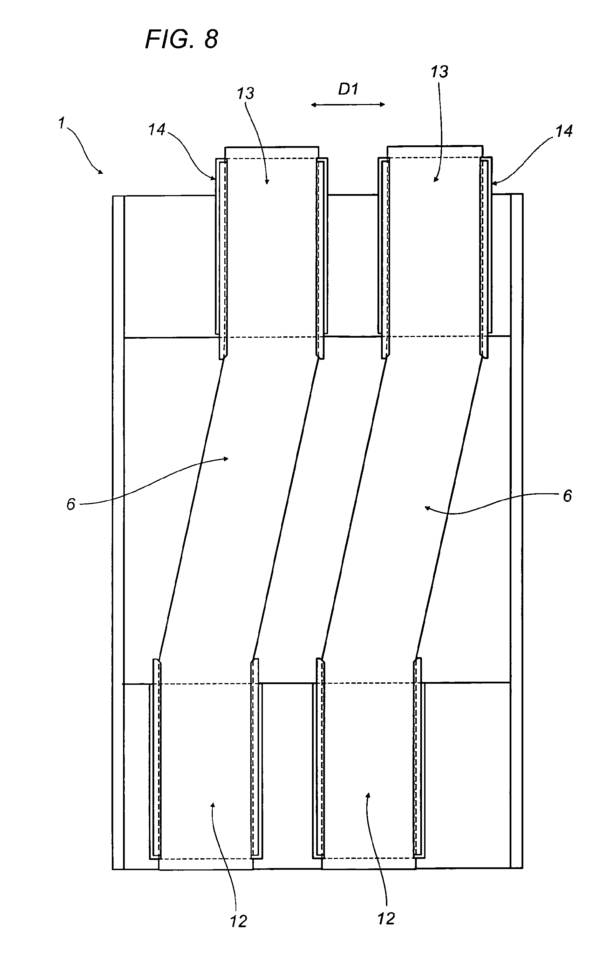

In another embodiment of the invention illustrated in Figure 8, the conveying apparatus 1 comprises two belts 6 running side by side and each equipped with respective sliding elements 14 that move in coordinated manner along the line D1.

Lastly, it should be noticed that rapid and precise variations in the position of the sliding element 14 in D1 can be obtained using as actuators electric motors of the brushless or stepping type. Drive devices of this type are specifically created for controlling position. They are therefore suitable for achieving the above mentioned aims.

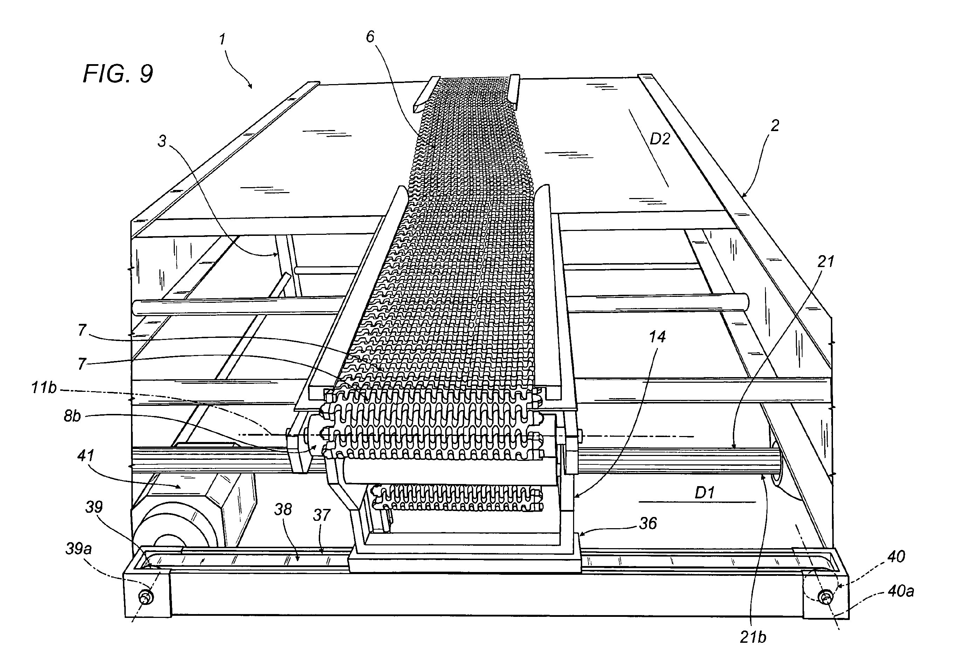

An example of how electric motors of this kind can be used for this purpose is illustrated in Figure 9.

With reference to Figure 9, a slide 36 is fixed to the sliding element 14; the slide 36 runs on a track 37 parallel to the line D1 and is driven along the track 37 by a flexible drive element, consisting, advantageously of a toothed belt 38.

The toothed belt 38 is trained in a loop around two pulleys 39, 40 that revolve about respective axes of rotation 39a, 40a parallel to the line D2.

The pulley 39 is a drive pulley and is operatively connected to an electric motor 41 of the brushless or stepping type, whilst the pulley 40 is a driven pulley.

It will be understood that the invention described may be useful in many industrial applications and may be modified and adapted in several ways without thereby departing from the scope of the inventive concept. Moreover, all the details of the invention may be substituted by technically equivalent elements.

## Claims

1. A product conveying apparatus comprising:
- at least one endless belt (6) made up of chain links (7) trained around at least two idler rollers (8a, 8b) defining at least one active section (9) for transporting the products and one return section (10), the idler rollers (8a, 8b) having respective parallel axes of rotation (11a, 11b), the active transport section (9) comprising two end portions (12, 13) located in the vicinity of the respective idler roller (8a, 8b);
- means (23) for driving the belt (6), the conveying apparatus being **characterised in that** at least one of the end portions (12, 13) of the active section (9) is designed to move along a first line (D1) substantially parallel to the axes (11a, 11b) of the roller (8a, 8b).

2. The conveying apparatus according to claim 1, **characterised in that** it comprises a sliding element (14) that moves along the first line (D1), the sliding element (14) slidably supporting the end portion (12, 13) of the active section (9).

3. The conveying apparatus according to claim 1 or 2, **characterised in that** the sliding element (14) comprises means (18) for guiding the belt (6) at the end portion (12, 13) of the active section (9).

4. The conveying apparatus according to claim 3, **characterised in that** the guide means (18) comprise two tracks (17) designed to laterally contain respective opposite longitudinal edges (6a, 6b) of the chain-link belt (6), the tracks (17) operating in such a way that the chain links (7) of the belt (6) are advanced by the drive means (23) along instantaneous lines (D4) which, at the sliding element (14), are substantially perpendicular to the first line (D1).

5. The conveying apparatus according to claim 4, **characterised in that** for at least one stretch (T2) of the active transporting section (9), the chain links (7) of the belt (6) are advanced along instantaneous lines (D5) at an angle to the first line (D1).

6. The conveying apparatus according to any of the foregoing claims from 2 to 5, **characterised in that** it comprises means (27) for actuating the sliding element (14).

7. The conveying apparatus according to claim 6, **characterised in that** the actuating means (27) comprise a drive motor (25d, 41).

8. The conveying apparatus according to claim 7, **characterised in that** the actuating means (27) comprise an electric brushless motor (41).

9. The conveying apparatus according to claim 7, **characterised in that** the actuating means (27) comprise an electric stepping motor (41).

10. The conveying apparatus according to claim 6 or 7, **characterised in that** the actuating means (27) comprise a flexible drive part (38) operatively connected to the sliding element (14).

11. The conveying apparatus according to claim 6 or 7, **characterised in that** the actuating means (27) comprise a lead nut and screw mechanism (26).

12. The conveying apparatus according to claim 11, **characterised in that** it comprises a threaded rod (24) that rotates about a respective axis of rotation (A1) parallel to the first line (D1), the threaded rod (24) constituting the screw of the lead nut and screw mechanism (26).

13. The conveying apparatus according to any of the foregoing claims from 1 to 12, **characterised in that** it comprises a device (28) for tensioning the belt (6), the device (28) being designed to compensate for changes in the length of the active transport section (9) that occur when the end portion (12, 13) moves.

14. The conveying apparatus according to claim 13, **characterised in that** the tensioning device (28) comprises at least two idler rollers (8d, 8e, 8m) for transmitting motion to the belt (6) and having respective axes (11d, 11e, 11m) parallel to the first line (D1), at least one (8m) of these rollers being movable relative to the others (8d, 8e) in such a way as to vary the distance of the respective axes (11m, 11d, 11e) from each other.

15. The conveying apparatus according to claim 14, **characterised in that** it comprises means (33) for adjusting the position of the movable idler roller (8m).

16. The conveying apparatus according to claim 15, **characterised in that** the adjustment means (33) comprise a hydraulic or electric actuator (29).

17. The conveying apparatus according to claim 15, **characterised in that** the adjustment means (33) comprise an elastic actuator.

18. The conveying apparatus according to any of the foregoing claims from 1 to 17, **characterised in that** both end portions (12, 13) of the active section (9) are designed to move along the first line (D1) substantially parallel to the axes (11a, 11b) of the rollers (8a, 8b).

19. The conveying apparatus according to claim 18, **characterised in that** the end portions (12, 13) of the active section (9) are designed to move translationally independently of each other, either simultaneously or in succession, either in the same or opposite directions along the line (D1).

20. The conveying apparatus according to any of the foregoing claims from 1 to 19, **characterised in that** it comprises two belts (6) running side by side.

21. The conveying apparatus according to any of the foregoing claims from 1 to 19, **characterised in that** it comprises a plurality of belts (6) running side by side.
